# EUROPEAN PATENT SPECIFICATION

(11) **EP 2 747 334 B1**
(45) Date of publication and mention of the grant of the patent: **13.12.2017**
(21) Application number: 13197715.9
(22) Date of filing: 17.12.2013
(51) Int. Cl.: H04L 9/08, H04L 9/32, H04L 29/06, H04W 4/00, H04W 12/02, H04W 12/06

(54) **A secure storage system including a virtual safe device and a mobile secure storage device**
Sicheres Speichersystem, aufweisend eine virtuelle Safevorrichtung und eine mobile sichere Speichervorrichtung
Système de stockage sécurisé comprenant un dispositif de sécurité virtuel et un dispositif de stockage sécurisé mobile

(30) Priority: 19.12.2012 US 201261739064 P; 19.12.2012 EP 12198190
(43) Date of publication of application: 25.06.2014
(73) Proprietor: Nagravision S.A., 1033 Cheseaux-sur-Lausanne (CH)
(72) Inventor: Pelletier, Hervé, 1053 Cugy (CH)
(74) Representative: Leman Consulting S.A.

(56) References cited:
- EP-A1- 2 533 488
- WO-A2-2010/057191
- US-A1- 2009 075 630

## Description

### TECHNICAL DOMAIN

The present invention relates to the domain of controlled access to digital information, more particularly to the secure storage or backup of said information.

### STATE OF THE ART

Human memory, being fallible in nature, cannot be solely relied upon for remembering everything. This has been a fundamental observation which led people to find ways of more reliably recalling information. Nowadays people are increasingly required to remember such things as usernames, passwords, personal identification numbers (PIN), account numbers and so on. This can be described as private information and includes information which is preferably unique to that person and serves to positively identify him. Furthermore, it is usually advantageous for such information to be kept secret, as its divulgation could either allow a third party to have access to that person's bank account or to otherwise pass himself off as that person or to have access to further personal information that the p16erson prefers to keep secret.

Knowing the poor reliability of some people's memories, people have resorted to writing such private information down on pieces of paper. For extra security the paper is sometimes locked in a safe or in an otherwise secure place. More recently, instead of using paper, the private information is often stored on a computer in clear text format. By computer it is understood to include mobile devices such as personal digital assistants (PDA) and mobile telephones for example. For extra security the stored information is often encrypted using the classically available encryption systems but again a password or pass-phrase is generally required to decrypt the information, leading to a classic chicken and egg scenario of where to save the password/pass-phrase.

In spite of the drawbacks associated with saving the private information on a mobile device such as a mobile phone, there is still great advantage to be drawn from such a technique from the point of view of convenience since many people have their mobile phone with them most times. There does exist a drawback in that accidental loss of the mobile device results in loss of all of the private information. This drawback may be overcome by scrupulous attention to backing up of the mobile device onto a safe backup medium. There exists therefore a strong incentive to resort to this technique of storing private information on mobile devices.

As recognised by the Applicant of United States Patent Application Publication number 2009/0075630 A1, use of the technique mentioned above does nothing to protect the private data from the prying eyes of unscrupulous third parties intent on accessing the private data thus stored, especially when the third party find's a mobile device of a person who has lost it. The generally recognised solution to this, which would be to maintain the private information only in encrypted format until such times as the user requires access to it, is said to be time-consuming, impractical and too processor/memory intensive to be done on a mobile device. By way of a solution to this, the document discloses mechanisms that enable users to protect data stored on mobile handsets by remotely activating an encryption application that encrypts data and then deletes the encryption key from the mobile handset memory. The encrypted data may be sent to a server as a backup mechanism. An encryption key is either received from the server or generated by the mobile handset and communicated to the server. The server is configured to authenticate users. The server may be further configured to restore the data to the mobile handset by transmitting the files via a wireless network, such as the cellular telephone network. The mechanisms may be configured for regular, periodic execution of the encryption and backup thus described to be automatically performed on selected data files. The disadvantage of this system is that in order to be able to decrypt the encrypted files the user needs to reinstate the encryption key. In order to do this he must request it from the server and he has to authenticate himself to the server. This leads once again to the chicken and egg problem of the user having to remember a password for the authentication.

United States Patent Application Publication number 2009/0075630 A1 describes a secure backup technique for use with mobile handsets, wherein an encryption application on the handset is remotely activated to allow private data to be encrypted by the handset. The private data from the mobile handset may also be sent to a remote server for backup, either in clear form or in encrypted form. Once the encryption is completed, the clear private data and the encryption key are deleted from the handset's memory.

The above system presents the disadvantages that the encrypted data remains on the handset and the encryption is performed by the handset. Furthermore, the private data may be intercepted by a malicious third party as it is communicated between the handset and the server. Similarly, the encryption key may be intercepted as it is sent to the handset. Finally, the decryption of the private data is also done on the handset. A further disadvantage is that the user has to be prompted to perform a backup, which, as disclosed in the publication, requires special steps to be taken to hide from a malicious party any indication that data is in the process of being backed up.

### BRIEF SUMMARY OF THE INVENTION

In order to overcome some of the disadvantages existing in the prior art for reliable protection of private information, the present invention provides for a mobile storage device and a virtual safe device which may work together at least temporarily to provide secure storage and retrieval of a private value. In the system according to an embodiment of the present invention, the mobile communications device is used to provide the private value to the virtual safe device and to store an encrypted version of the private value. Encryption is done by the virtual safe device, using a secret key corresponding to the mobile communications device, the encrypted private value being sent back to the mobile communications device. The private value may be restored when the mobile device sends the encrypted private value back to the virtual safe device. The virtual safe device then authorises the mobile device access to the decrypted private value. This authorisation may be achieved by the virtual safe device simply sending the decrypted private value back to the mobile device or sending the encrypted value and the secret key back to the mobile device, where the mobile device completes the decryption. The communications mentioned above may only take place when the two devices are within a predetermined distance from each other, this distance being sufficiently low to require that both the virtual safe, the mobile device and, by deduction, the user, are all simultaneously in the user's house for example. Preferably the communication channel between the two devices is a secured one.

According to a first aspect of the present invention, there is provided a method for securely storing a private value, the method using a system comprising:
a mobile storage device having an identifying parameter, the mobile storage device comprising a first wireless communications interface configured to establish a local proximity wireless connection with a compatible device; and
a virtual safe device configured to carry out cryptographic functions, the virtual safe device comprising:
   a second wireless communications interface configured to establish a local proximity wireless connection with a compatible device;
   a security module; and
   a secure memory for storing at least one secret key corresponding to the identifying parameter of at least one mobile storage device;
the method comprising:
   establishing a local proximity wireless communication channel between the first wireless communications interface and the second wireless communications interface;
   sending the identifying parameter from the mobile storage device to the virtual safe device via the local proximity wireless communication channel;
   sending the private value from the mobile storage device to the virtual safe device via the local proximity wireless communication channel;
   encrypting, by the security module, the private value using the secret key corresponding to the identifying parameter of the mobile storage device to give the encrypted version of the private value; and
   sending the encrypted version of the private value from the virtual safe device to mobile storage device.

According to another aspect of the present invention, provision is made for a secure storage system comprising a virtual safe device and a mobile storage device; the mobile storage device having an identifying parameter and comprising a first wireless communications interface configured to function according to a proximity wireless communication standard;
the virtual safe device comprising:
a second wireless communications interface configured to function according to the proximity wireless communication standard and thereby to establish a local proximity wireless communication channel between the virtual safe device and the mobile storage device;
a secure memory for storing at least one secret key corresponding to the identifying parameter of the mobile storage device; and
a security module configured to:
   receive the private value from the mobile storage device via the local proximity wireless communication channel; and
   encrypt the private value using the secret key corresponding to the identifying parameter of the mobile storage device.

Embodiments of the present invention provide advantages, among others, in that the decryption key need not be stored on the mobile storage device, and indeed may be actively deleted from the mobile storage device when the user removes the device from the secure environment provided by the user's home, thereby greatly reducing the possibility of a malicious third party discovering the decryption key from within the relatively insecure environment of the mobile storage device at any time outside the home. In these embodiments, decryption of the private values may only be accomplished while the user is in his home, or at least close enough to the virtual safe device for the close proximity wireless interface to function.

According to other embodiments, advantageously, the decryption key need never even leave the secure environment represented by the virtual safe device. Since the decryption key is never passed to the mobile storage device this eliminates the possibility of a malicious third party discovering the decryption key as it is passed from the virtual safe device to the mobile storage device and also eliminates the possibility of the decryption key being discovered from within the mobile storage device at any time. Standard mobile communications devices, such as mobile phones or tablet devices etc., with no particular modification can be used since the burden of carrying out the cryptographic functions is placed on the virtual safe device. A set-top box or other audio/video reception device or media server, adapted according to embodiments of the invention, can conveniently be used as a virtual safe device.

These and other aspects of the present invention will be described below.

### BRIEF DESCRIPTION OF THE DRAWINGS

The present invention will be better understood thanks to the detailed description which follows and the accompanying drawing, which is given as non-limiting examples of embodiments of the invention, wherein:
figure 1 shows a diagram of a system in which an embodiment of the present invention may be deployed.
figure 2 shows a diagram of a sequence of events occurring in a system in which an embodiment of the present invention may be deployed.

### DETAILED DESCRIPTION

The present invention takes advantage of the fact, among others, that sufficiently reliable authentication may be achieved in relatively simple ways depending on the environment and the circumstances under which the authentication is to take place.

It is a common desire for people to save certain private details or private values such that they are conveniently accessible yet secure. Such private values may take the form of a password, a pass-phrase, an account id and/or a password, credit card numbers etc. These values, if discovered by a malicious third party, present an opportunity for that third party to do some damage. The rewards perceived by that third party however are usually limited in the case of private values pertaining to a private individual, so for the same amount of work at trying to discover such information, the third party may decide to try to attempt to discover other information where the benefits may be multiplied. For example if the discovery of a secret key could lead to the third party being able to sell pirated copies of a piece of software or a film, then this could provide a high incentive to the third party. The private values discussed here however present little incentive for a malicious third party but still require to be sufficiently secured so as to dissuade the third party from trying to access the private values.

With this is mind, embodiments of the present invention are proposed where security is provided on a basis that, in general, a user of a system in which an embodiment of the present invention is deployed will generally be assured that only a limited number of people will have access to his home. Furthermore, under normal circumstances, only the user will have access to the user's personal mobile communications device. Here, communications device may be taken to be a personal digital assistant, a mobile telephone or any mobile device capable of performing wireless communication with a server. By server this can mean any wireless-enabled computing device such as a personal computer or, as in particular embodiments of the present invention, a set-top box or any media playing reception device, especially those being equipped with a smartcard or a security module or being other wise capable of performing cryptographic functions. Based on these two simultaneous conditions i.e. having access to a particular premises such as a particular home and having access to a particular mobile communication device such as a particular smart phone, a sufficient degree of security is established in that a particular reception device in the particular home will be able to authenticate a particular mobile device with a reasonable degree of confidence. According to an embodiment of the present invention, the wireless communication means between the reception device and the mobile communications device is further limited to be of a proximity type since it has a limited range. One example of a proximity type of wireless communications channel is one which is Bluetooth compliant. Any type of proximity communication means may be used. Advantageously, one which complies with the Near Field Communication Standard (NFC), when used in embodiments of the present invention, limit the possibilities for establishing a communication with the reception device by a mobile communication device to be only those which are within a few centimetres of the reception device. This provides a guarantee that the mobile communication device and its user really are in close proximity to each other for a connection to be established. Such communications channels are therefore also known as local proximity communications channels. Accordingly, wireless communication interfaces compliant with the WiFi standard provide a disadvantage in a system according to embodiments of the present invention in that the condition of the user being in close proximity, a requirement that is satisfied when the user is in his own home, is thereby less stringently enforced.

It can be seen then that given the above constraints, malicious third parties seeking to take advantage from private values secured according to an embodiment of the present invention, in order to achieve their goals, should demonstrate the unlikely simultaneous characteristics of having access to the user's home and being in possession of the user's mobile phone.

According to an embodiment of the present invention a system is provided, comprising a set-top box and at least one mobile phone. The set-top box is configured according to known Pay-TV systems and thereby comprises a security module or a smartcard and is configured to perform secure operations such as performing cryptographic functions and to securely store cryptographic keys and other secret values in a secure memory. Preferably the set-top box remains powered on at all times but is at least able to function when the user arrives home or shortly thereafter. The set-top box should remain powered on as long as the user wishes to use it in the manner described herein. The system may comprise more than one mobile phone, usually pertaining to different users as long as each mobile phone can be uniquely identified. A mobile phone configured to function according to embodiments of the present invention, requires to be first registered by the system. As long as a registered mobile phone and its respective user is within a predetermined distance from the set-top box, then that user will be able to securely access any of his private values which have been stored in the system. By mobile phone, in the context of the present invention, it is meant to include any personal mobile communication device including mobile phones, PDAs, laptops, tablets etc. Such devices are usually only used by one person and are thereby personal or private. By set-top box it is meant to include any media content reception device capable of establishing a wireless communication channel as described herein.

The process for registering a mobile phone according to embodiments of the present invention is now described in part. As mentioned, the set-top box of the system described above comprises a smart card, preferably paired or otherwise associated with the set-top box. The smart-card is configured to perform asymmetric or symmetric cryptographic functions and as such is associated with a public key, the public key having public key elements (e,N). Part of the procedure for registering a mobile phone requires that the public key associated with the smart card be saved on the mobile phone. This need only be done once and may be performed for example via internet when the mobile phone further comprises an internet communication interface. According to one embodiment the user establishes a connection between the mobile phone and the set-top box (either wirelessly or via internet when the set-top box further comprises an internet connection) in order to receive the public key from the set-top box. According to another embodiment, the system further comprises a public key server and the user establishes a connection between the mobile phone and the public key server via internet. The user is thus able to store the public key on the mobile phone, thereby accomplishing the first part of registering the mobile phone. The second part will be described in a later part of the discussion.

As long as the mobile phone is close enough to the set-top box to be within the operating range of the communication interface of the system (a few centimetres for an NFC-compliant wireless communication interface) a secure wireless channel may be established between the mobile phone and the set-top box (smartcard). To render the wireless channel secure any of the known techniques may be used. For example, the mobile phone generates a random value x according to the Diffie-Hellman protocol and computes a secret s = g^x mod p, where p and g are group parameters (prime and generator, respectively) of the Diffie-Hellman protocol. Using the stored public key elements, the mobile phone calculates s^e mod N and sends it, via the wireless communication channel, to the smartcard in the set-top box. This prevents so-called "man-in-the-middle" attacks. The smartcard decrypts the value received from the mobile phone using its private key d and generates a second random value y. It then computes a channel key Kc by as Kc = g^(x*y) mod p. The smartcard sends g^y mod p back to the mobile phone and the mobile phone then also calculates Kc since now it can do Kc = g^(x*y) mod p. Kc now becomes a channel key with which the channel between the set-top box and the mobile phone can be secured. This key is used to encrypt/decrypt (using a symmetrical cryptographic algorithm) all further exchanges between the set-top box and the mobile phone. Thanks to this secure channel eavesdropping by third parties is prevented.

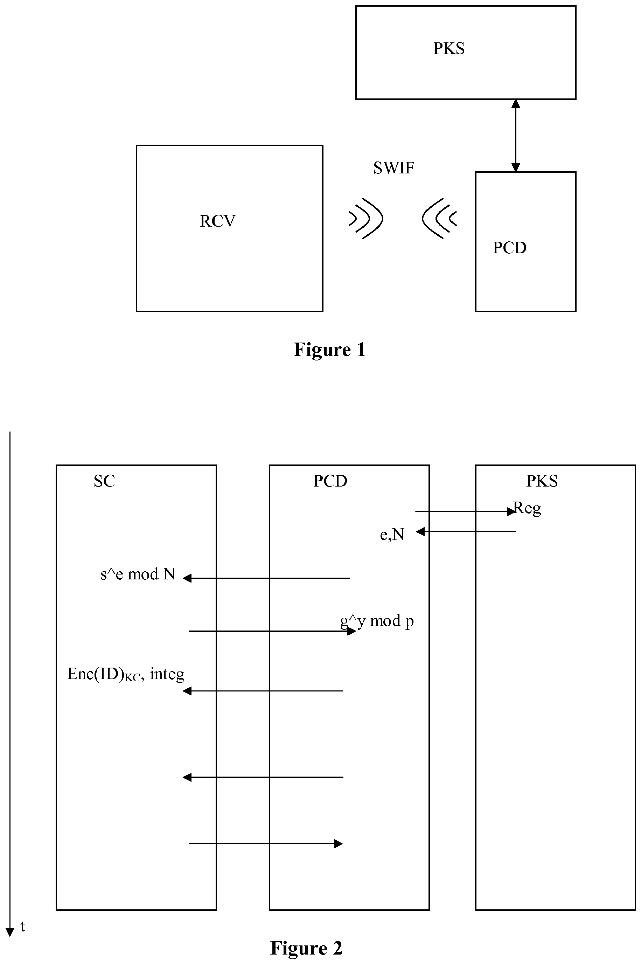

Figure 1 shows a schematic diagram of a system in which an embodiment of the present invention may be deployed. The system comprises at least one mobile communications device (PCD) having a unique identifying parameter (UID) and a set-top box (STB) having a smartcard (SC). In this embodiment the set-top box and the smartcard together will be known as a virtual safe (RCV). The mobile communications device (PCD) comprises a first wireless communication interface module (WIF1), a processor capable of carrying out cryptographic functions and a memory module (MM1). The virtual safe device (RCV) comprises a second wireless interface module (WIF2) and a key generation module and further comprises a cryptographic module. The system is configured such that the virtual safe device (RCV) and the mobile communications device (PCD) are able to establish a wireless communication channel (SWIF) between them only if said two devices are within a predetermined distance (DMAX) from one another. Preferably such a channel complies with an NFC or Bluetooth Standard such that the communication channel (SWIF) can only become established when the two devices are a few centimetres from each other or several metres from each other, respectively. According to this embodiment the system further comprises a public key server (PKS) to provide the mobile communications device (PCD) with the public key of the virtual safe device (or the smartcard within). The mobile communication device and the public key server are configured to be able to communicate with each other, preferably via an internet connection but this could be any of the other known means. According to another embodiment, the virtual safe device provides the public key to the mobile communications device. This may be done via a second communication channel. It is recognised that it is advantageous from a security point of view to resort to the services of a public key server however.

As previously mentioned, whenever the mobile communications device comes to within the predetermined distance of the virtual safe device, a wireless communication channel may be established between the two devices. If registration has not been completed and the mobile communications device is not already known to the virtual safe device, then the unique identifying parameter of the mobile communications device will not be known to the virtual safe device. By unique identifying parameter it is meant a parameter which can be used to positively identify a device. By positively identify it means that the virtual safe device can know with certainty that a device presenting the same unique identifying parameter as was previously presented is in fact the same device as was previously presented. For this reason the term "unique identifying parameter" may be replaced by "identifying parameter". To complete the second part of the registration then, a mobile communication device has to establish a connection with the virtual safe device and communicate its unique identifying parameter to the virtual safe device. For each unique identifying parameter of each mobile communications device in the system the virtual safe device generates an associated secret key (KSI). All of the associated secret keys are stored in a secure memory of the virtual safe device. This completes the second part of the registration.

A method for storing a private value according to various embodiments of the present invention includes sending the private value from the mobile device to the virtual safe device, preferably via a secure wireless channel; encrypting the private value on the virtual safe device using a secret key corresponding to the mobile device. The secret key is securely stored on the virtual safe device and need not be stored on the mobile device. The encrypted private value is sent back to the mobile device where it is stored. The private value is deleted from the mobile device and may preferably be deleted from the virtual safe device. The encrypted private value may also be deleted from the virtual safe device, however according to some embodiments it is kept on the virtual safe device as a backup.

Whenever the user wants to store a private value he approaches the virtual safe device with his mobile communication device until he reaches the predetermined range and thereby establishes a secure channel between the mobile device and the virtual safe. The mobile device sends its unique identifying parameter to the virtual safe, which authenticates it. The private value is sent from the mobile communications device via the secure channel to the virtual safe where it is encrypted under the secret key corresponding to the mobile communications device and sent back to the mobile communications device to be stored there in encrypted fashion. The private value is deleted from both the mobile communications device and the virtual safe device and therefore no longer exists anywhere in clear format.

A private value corresponding to a particular mobile communications device is therefore encrypted by the virtual safe and stored in encrypted format on the mobile device. A method for restoring the private value on the mobile device according to various embodiments of the present invention is now described. Restoration of the private value may occur when the mobile communications device finds itself within the required range (DMAX) of the virtual safe device. Whenever a mobile communications device comes within range of the virtual safe device and a wireless communications channel is established, the virtual safe device verifies the unique identifying parameter, received from the mobile communications device via the wireless communication channel, checks whether or not the mobile communications device is known and verifies its integrity. In order to restore the private value onto the mobile communications device, the mobile device sends the encrypted version of the private value back to the virtual safe device. The virtual safe device, having completed the integrity check, knows which mobile device is making the request for restore and uses the secret key corresponding to the mobile communications device to decrypt the private value and sends the decrypted private value back to the mobile communications device via the wireless communications channel. Optionally and advantageously, the wireless communications channel is secured as described above, thanks to the channel key.

In this manner the mobile communications device has restored a private value in a secure manner thanks to the secure channel and furthermore has done so without the secret key (KSI) ever having left the secure environment of the virtual safe device. This has been done in a convenient manner in that the user never has to remember any passwords in order to authenticate himself while requesting the private value to be restored. It was sufficient for the suitably registered mobile communications device to enter into a predetermined short range of the virtual communications device for the private value to be automatically transferred in a secure manner to the mobile communications device. According to another embodiment, the mobile device need not request access to the private value by sending the encrypted version of the private value back to the virtual safe, since this is done automatically whenever the communications device comes to within the predetermined range of the virtual safe. According to this embodiment, the virtual safe automatically decrypts all of the encrypted private values on the mobile device and sends them back decrypted. This embodiment may preferably be combined with another embodiment described later where the private values, once decrypted, are associated with a lifetime. In this manner, whenever the mobile device leaves the vicinity of the virtual safe then all of the private values in clear are erased from the mobile device.

According to different embodiments of the present invention, different ways of accessing the private value are possible. According to a first embodiment, as described above, whenever the mobile device and the safe are close enough to each other for the wireless channel to be established the private value is automatically made available to the mobile device. According to another embodiment, once the communication channel has been established, the mobile device first makes a request to the virtual safe before being granted access to the private value. The request includes the mobile device sending the encrypted version of the private value back to the virtual safe for the virtual safe to decrypt using the mobile device's secret key.

The terms "granted access" and "made available" as used above are both meant to cover the idea of the mobile device being authorised by the virtual safe to restore a clear copy of the encrypted private value into its memory. According to different embodiments this is done in different ways. According to one embodiment the authorisation is given simply by the virtual safe decrypting the private value and sending it via the secure channel to the mobile device which stores it in its memory. In another embodiment the virtual safe sends the secret key and the encrypted private value to the mobile device via the secure channel and the mobile device decrypts the private value.

Further security measures are undertaken according to another embodiment of the present invention, wherein automatic deletion of the private values from the mobile device's memory is performed whenever the mobile device leaves the predetermined range from the virtual safe. This ensures that the private value does not remain in the mobile device's memory once the user leaves his house for example.

According to another embodiment of the present invention, the private value, once restored in the mobile device, has a predetermined lifespan. The predetermined lifespan can be expressed in terms of a predetermined time. After the predetermined lifespan has elapsed the private value is deleted from the mobile device's memory. This embodiment can be combined with the one above, whereby even if the mobile device stays within the predetermined range, if the predetermined lifespan elapses, then the private value is still deleted. The embodiments in these two paragraphs (above) have variants wherein they are combined with the embodiment where the secret key is sent to the mobile device. The key may also have a lifespan and may also be erased when the mobile device leaves the predetermined vicinity of the virtual safe.

According to yet another embodiment, combinable with the embodiments of the two paragraphs above, the predetermined lifetime can be topped up. This prevents the private data being erased as long as the user is at home for example. According to this embodiment the predetermined lifetime is prolonged or otherwise extended as many times as necessary as long as the user's mobile device is close enough to the virtual safe device for a connection to be established. For example, if the user is authorised to access his private value a first time for a predetermined lifespan, moves away from the virtual safe for a time which falls within the predetermined lifespan (leaves home) before coming back to within the predetermined range of the virtual safe (arrives back home), then the private value remains on the mobile device. This allows for convenience of having access to less sensitive data even when the user leaves home. The user can decide which information is sensitive and which is not and configure the system to associate life-spans to different information so that sensitive information is quickly erased while less sensitive information remains for longer even when he leaves home.

Figure 2 shows processes which may be executed in a system in which an embodiment of the present invention is deployed. The processes are executed in sequence from top to bottom of the figure. Registration of the mobile device is initiated through obtention of the public key associated with the virtual safe device. This can be done through the intermediary of a public key server. Registration is completed when the mobile device makes itself known to the virtual safe device by sending its unique identifier (identifying parameter). This may also be accompanied by an integrity figure so that the virtual safe can check the integrity. The secret is generated by the mobile device, which generates a random number and calculates the secret s = g^x mod p. s^e mod N (using the public key from the key server) is then computed and sent by the mobile device. This is received by the virtual safe, which also generates a random y. The virtual safe decrypts (s^e mod N) ^d mod N, where d is the virtual safe's RSA private key, and computes g^y mod p, which is then sent to the mobile device. Both the virtual safe and the mobile device compute the channel key as Kc=g^x.y mod p according to the Diffie-Hellman protocol. The mobile device encrypts its unique identity parameter and sends it to the virtual safe device along with its integrity figure. The virtual safe device checks this and now knows with certainty which secret key belongs to the mobile device. Otherwise it generates a secret key for that mobile device. The mobile device initiates a request to access private data by sending the encrypted private data to the virtual safe. The virtual safe can either decrypt the private data using the mobile device's secret key or send the key back to the mobile device for decryption to be done there. The mobile device thus never has to store the decryption key or the private value in clear when it is away from the virtual safe device, thereby imparting the necessary security and convenience.

All of the embodiments described above rely on the ability of the virtual safe device to supply its public key to the mobile storage device in the proper manner or, more critically, on the ability of the virtual safe device to have ready access to the secret key associated with the mobile device which requests a private value to be stored or returned. It could happen that, due to some catastrophic error, the virtual safe device is no longer able to make such a guarantee. According to another embodiment of the present invention, provision is made to counter the possibility of a secret key being lost. This embodiment, combinable with any of the embodiments described above in which the mobile storage device performs the encryption or decryption of the private value, takes advantage of the fact that the user generally has a computing device somewhere in his home. The computing device may be a personal computer for example or a second mobile storage device such as a tablet computer for example. The computing device will therefore be referred to as a second storage device, the second storage device being a second mobile storage device in the case where it is a tablet computer. The second storage device also has communications means with the virtual safe device, which could be a wired connection or a wireless connection. This connection, when it is wireless, need not necessarily be of a proximity type. According to this embodiment, where the mobile storage device has to encrypt the private value, the virtual safe device sends a first part of the secret key to the mobile storage device and a second part of the secret key to the second storage device, the first and second parts of the key being combinable to form the secret key. Neither the first part of the secret key nor the second part of the secret key are sufficient to encrypt or decrypt the private value. Furthermore, it is not possible to derive the secret key from either of the first part of the secret key alone or the second part of the secret key alone. In this manner, if the secret key is ever lost due to a catastrophic error, the private value may still be recovered as long as the mobile storage device and the second mobile storage device can collaborate with each other allowing for the secret key to be regenerated or otherwise reconstituted using the first and second parts of the secret key.

## Claims

1. A method for securely storing a private value (PV), the method using a system comprising:
a mobile storage device (PCD) having an identifying parameter (UID), the mobile storage device (PCD) comprising a first wireless communications interface (WIF1) configured to establish a local proximity wireless connection; and
a virtual safe device (RCV) configured to carry out cryptographic functions, the virtual safe device comprising:
a second wireless communications interface (WIF2) configured to establish a local proximity wireless connection;
a security module; and
a secure memory comprising a secret key (KSI) corresponding to the identifying parameter (UID) of the at least one mobile storage device (PCD), said secret key (KSI) having been generated by the virtual safe device (RCV);
the mobile storage device (PCD) storing a public key associated with the security module;
the method comprising:
establishing a local proximity wireless communication channel (SWIF) between the first wireless communications interface (WIF1) and the second wireless communications interface (WIF2);
sending the identifying parameter (UID) from the mobile storage device (PCD) to the virtual safe device (RCV) via the local proximity wireless communication channel (SWIF);
sending the private value (PV) from the mobile storage device (PCD) to the virtual safe device (RCV) via the local proximity wireless communication channel (SWIF);
encrypting, by the security module, the private value (PV) using the secret key (KSI) corresponding to the identifying parameter (UID) of the mobile storage device (PCD) to give the encrypted version of the private value; and
sending the encrypted version of the private value from the virtual safe device (RCV) for said secure storage of the private value (PV) to be made on the mobile storage device (PCD).

2. The method according to claim 1, further comprising deleting the private value (PV) from the mobile storage device (PCD).

3. The method according to either of claims 1 or 2, further comprising generating the secret key (KSI) corresponding to the identifying parameter (UID) of the mobile storage device (PCD) if that identifying parameter (UID) is not already stored in the secure memory, said generating being carried out by the security module.

4. The method according to any of the preceding claims, further comprising deleting either, or both of, the private value (PV) and the encrypted version of the private value from the virtual safe device (RCV) after said sending of the encrypted version of the private value to the mobile storage device (PCD).

5. The method according to any of the preceding claims, wherein the local proximity wireless communication channel (SWIF) is a secured channel, said channel having been secured using the public key associated with the security module.

6. The method according to claim 5, wherein said public key is received from the virtual safe device (RCV).

7. The method according to claim 5, wherein said public key is received from a public key server via a second communication channel different from the local proximity wireless communication channel (SWIF).

8. The method according to any of the preceding claims, wherein the local proximity wireless communication channel (SWIF) is configured to operate according to a Bluetooth wireless communication standard.

9. The method according to any of the preceding claims, wherein the local proximity wireless communication channel (SWIF) is configured to operate according to a near-field communications wireless communication standard (NFC).

10. The method according to any of the preceding claims, the method further comprising a step of restoring the personal value (PV), said restoring step comprising:
sending the encrypted version of the private value from the mobile storage device (PCD) to the virtual safe device (RCV) via the local proximity wireless communication channel (SWIF);
decrypting the personal value by the virtual safe device (RCV) using the secret key (KSI) corresponding to the mobile storage device (PCD);
returning the decrypted personal value (PV) to the mobile storage device (PCD) via the local proximity wireless communication channel (SWIF).

11. A secure storage system comprising a virtual safe device (RCV) and a mobile storage device (PCD);
the mobile storage device (PCD) having an identifying parameter (UID) and comprising a first wireless communications interface (WIF1) configured to function according to a proximity wireless communication standard;
the virtual safe device (RCV) comprising:
a second wireless communications interface (WIF2) configured to function according to the proximity wireless communication standard and thereby to establish a local proximity wireless communication channel (SWIF) between the virtual safe device (RCV) and the mobile storage device (PCD);
a secure memory comprising a secret key (KSI) corresponding to the identifying parameter (UID) of the mobile storage device (PCD), said secret key (KSI) having been generated by the virtual safe device (RCV); and
a security module configured to:
receive the private value (PV) and the identifying parameter (UID) from the mobile storage device (PCD) via the local proximity wireless communication channel (SWIF); and
encrypt the private value using the secret key (KSI) corresponding to the identifying parameter (UID) of the mobile storage device (PCD) the mobile storage device (PCD) storing a public key associated with the security module;
send the encrypted version of the private value to said mobile storage device (PCD) for storage.

12. The secure storage system according to claim 11, wherein the security module is further configured to generate the secret key (KSI) corresponding to the identifying parameter (UID) of the mobile storage device (PCD).

13. The secure storage system according to either of claims 11 or 12, wherein the security module has a corresponding private key for securing the local proximity wireless communication channel (SWIF).

14. The secure storage system according to any of claims 11 to 13, wherein the mobile storage device (PCD) is a mobile communication device and the virtual safe device (RCV) is a media content reception device.

15. The secure storage system according to any of claims 11 to 14, wherein the proximity wireless communication standard is one of a Bluetooth Standard or a Near-Field Communications (NFC) Standard.

## Patentansprüche

1. Verfahren zum sicheren Speichern eines privaten Wertes (PV) unter Verwendung eines Systems mit:
einer mobilen Speichervorrichtung (PCD) mit einem Identifizierungsparameter (UID), wobei die mobile Speichervorrichtung (PCD) eine erste drahtlose Kommunikationsschnittstelle (WIF1) umfasst, die konfiguriert ist eine ortsnahe drahtlose Verbindung aufzubauen; und
einer virtuellen sicheren Vorrichtung (RCV), die konfiguriert ist, um kryptographische Funktionen durchzuführen, und folgendes umfasst:
eine zweite drahtlose Kommunikationsschnittstelle (WIF2), die konfiguriert ist, eine ortsnahe drahtlose Verbindung aufzubauen;
ein Sicherheitsmodul; und
einen Sicherheitsspeicher mit einem Geheimschlüssel (KSI), der dem Identifizierungsparameter (UID) der mindestens eine mobile Speichervorrichtung (PCD) entspricht, wobei der Geheimschlüssel (KSI) von der virtuellen sicheren Vorrichtung (RCV) erzeugt wurde;
wobei die mobile Speichervorrichtung (PCD) einen öffentlichen Schlüssel speichert, der dem Sicherheitsmodul zugeordnet ist;
wobei das Verfahren folgendes umfasst:
Aufbau eines ortsnahen drahtlosen Kommunikationskanals (SWIF) zwischen der ersten drahtlosen Kommunikationsschnittstelle (WIF1) und der zweiten drahtlosen Kommunikationsschnittstelle (WIF2);
Senden des Identifizierungsparameters (UID) von der mobilen Speichervorrichtung (PCD) an die virtuelle sichere Vorrichtung (RCV) über den ortsnahen drahtlosen Kommunikationskanal (SWIF);
Senden des privaten Wertes (PV) von der mobilen Speichervorrichtung (PCD) an die virtuelle sichere Vorrichtung (RCV) über den ortsnahen drahtlosen Kommunikationskanal (SWIF);
Verschlüsselung, durch das Sicherheitsmodul, des privaten Wertes (PV) unter Verwendung des Geheimschlüssels (KSI), der dem Identifizierungsparameter (UID) der mobilen Speichervorrichtung (PCD) entspricht, um die verschlüsselte Version des privaten Wertes zu geben; und
Senden der verschlüsselten Version des privaten Wertes von der virtuellen sicheren Vorrichtung (RCV) zur sicheren Speicherung des privaten Wertes (PV) auf der mobilen Speichervorrichtung (PCD).

2. Verfahren nach Anspruch 1, das des Weiteren das Löschen des privaten Wertes (PV) von der mobilen Speichervorrichtung (PCD) umfasst.

3. Verfahren nach einem beliebigen der Ansprüche 1 oder 2, das des Weiteren das Erzeugen des Geheimschlüssels (KSI) umfasst, der dem Identifizierungsparameter (UID) der mobilen Speichervorrichtung (PCD) entspricht, wenn dieser Identifizierungsparameter (UID) nicht schon in dem Sicherheitsspeicher gespeichert ist, wobei die Erzeugung vom Sicherheitsmodul durchgeführt wird.

4. Verfahren nach einem beliebigen der vorherigen Ansprüche, das des Weiteren das Löschen des privaten Wertes (PV) und/oder der verschlüsselten Version des privaten Wertes von der virtuellen sicheren Vorrichtung (RCV) nach dem Senden der verschlüsselten Version des privaten Wertes an die mobile Speichervorrichtung (PCD) umfasst.

5. Verfahren nach einem beliebigen der vorherigen Ansprüche, wobei der ortsnahe drahtlose Kommunikationskanal (SWIF) ein gesicherter Kanal ist, der unter Verwendung des öffentlichen Schlüssels gesichert wurde, der dem Sicherheitsmodul zugeordnet ist.

6. Verfahren nach Anspruch 5, wobei der öffentliche Schlüssel von der virtuellen sicheren Vorrichtung (RCV) empfangen wird.

7. Verfahren nach Anspruch 5, wobei der öffentliche Schlüssel von einem öffentlichen Schlüsselserver mittels eines zweiten Kommunikationskanals empfangen wird, der ein anderer als der ortsnahe drahtlose Kommunikationskanal (SWIF) ist.

8. Verfahren nach einem beliebigen der vorherigen Ansprüche, wobei der ortsnahe drahtlose Kommunikationskanal (SWIF) konfiguriert ist, um gemäß einem Bluetooth-Funkverbindungsstandard zu arbeiten.

9. Verfahren nach einem beliebigen der vorherigen Ansprüche, wobei der ortsnahe drahtlose Kommunikationskanal (SWIF) konfiguriert ist, um gemäß einem Nahfeldkommunikations-Funkstandard (NFC) zu arbeiten.

10. Verfahren nach einem beliebigen der vorherigen Ansprüche, wobei das Verfahren des Weiteren eine Phase der Wiederherstellung des persönlichen Wertes (PV) umfasst, mit:
Senden der verschlüsselten Version des privaten Wertes von der mobilen Speichervorrichtung (PCD) an die virtuelle sichere Vorrichtung (RCV) über den ortsnahen drahtlosen Kommunikationskanal (SWIF);
Entschlüsselung des persönlichen Wertes durch die virtuelle sichere Vorrichtung (RCV) unter Verwendung des Geheimschlüssels (KSI), der der mobilen Speichervorrichtung (PCD) entspricht;
Zurücksenden des entschlüsselten persönlichen Wertes (PV) an die mobile Speichervorrichtung (PCD) über den ortsnahen drahtlosen Kommunikationskanal (SWIF).

11. Sicheres Speichersystem mit einer virtuellen sicheren Vorrichtung (RCV) und einer mobilen Speichervorrichtung (PCD);
wobei die mobile Speichervorrichtung (PCD) einen Identifizierungsparameter (UID) und eine erste drahtlose Kommunikationsschnittstelle (WIF1) umfasst, die konfiguriert ist, um gemäß einem ortsnahen drahtlosen Kommunikationsstandard zu funktionieren;
wobei die virtuelle sichere Vorrichtung (RCV) folgendes umfasst:
eine zweite drahtlose Kommunikationsschnittstelle (WIF2), die konfiguriert ist, um gemäß dem ortsnahen drahtlosen Kommunikationsstandard zu funktionieren und dadurch einen ortsnahen drahtlosen Kommunikationskanal (SWIF) zwischen der virtuellen sicheren Vorrichtung (RCV) und der mobilen Speichervorrichtung (PCD) aufzubauen;
einen Sicherheitsspeicher mit einem Geheimschlüssel (KSI), der dem Identifizierungsparameter (UID) der mobilen Speichervorrichtung (PCD) entspricht, wobei der Geheimschlüssel (KSI) von der virtuellen sicheren Vorrichtung (RCV) erzeugt wurde; und
ein Sicherheitsmodul, das konfiguriert ist, um:
den privaten Wert (PV) und den Identifizierungsparameter (UID) von der mobilen Speichervorrichtung (PCD) über den ortsnahen drahtlosen Kommunikationskanal (SWIF) zu empfangen; und
den privaten Wert unter Verwendung des Geheimschlüssels (KSI) zu verschlüsseln, der dem Identifizierungsparameter (UID) der mobilen Speichervorrichtung (PCD) entspricht
wobei die mobile Speichervorrichtung (PCD) einen öffentlichen Schlüssel speichert, der dem Sicherheitsmodul zugeordnet ist;
Senden der verschlüsselten Version des privaten Wertes an die mobile Speichervorrichtung (PCD) zur Speicherung.

12. Sicheres Speichersystem nach Anspruch 11, wobei das Sicherheitsmodul des Weiteren konfiguriert ist, um den Geheimschlüssel (KSI) zu erzeugen, der dem Identifizierungsparameter (UID) der mobilen Speichervorrichtung (PCD) entspricht.

13. Sicheres Speichersystem nach einem beliebigen der Ansprüche 11 oder 12, wobei das Sicherheitsmodul einen entsprechenden privaten Schlüssel hat, um den ortsnahen drahtlosen Kommunikationskanal (SWIF) zu sichern.

14. Sicheres Speichersystem nach einem beliebigen der Ansprüche 11 bis 13, wobei die mobile Speichervorrichtung (PCD) ein mobiles Kommunikationsgerät ist und die virtuelle sichere Vorrichtung (RCV) eine Vorrichtung zum Empfang von Medieninhalt ist.

15. Sicheres Speichersystem nach einem beliebigen der Ansprüche 11 bis 14, wobei der ortsnahe drahtlose Kommunikationsstandard entweder ein Bluetooth-Funkverbindungsstandard oder ein Nahfeldkommunikations-Funkstandard (NFC) ist.

## Revendications

1. Méthode pour stocker de manière sécurisée une valeur privée (PV), la méthode utilisant un système comprenant :
un dispositif de stockage mobile (PCD) ayant un paramètre d'identification (UID), le dispositif de stockage mobile (PCD) comprenant une première interface de communications sans fil (WIF1) configurée pour établir une connexion sans fil de proximité locale; et
un dispositif de sécurité virtuel (RCV) configuré pour exécuter des fonctions cryptographiques, le dispositif de sécurité virtuel comprenant :
une deuxième interface de communications sans fil (WIF2) configurée pour établir une connexion sans fil de proximité locale ;
un module de sécurité; et
une mémoire sécurisée comprenant une clé secrète (KSI) correspondant au paramètre d'identification (UID) de l'au moins un dispositif de stockage mobile (PCD), ladite clé secrète (KSI) ayant été générée par le dispositif de sécurité virtuel (RCV) ;
le dispositif de stockage mobile (PCD) stockant une clé publique associée au module de sécurité ;
la méthode comprenant :
établissement d'un canal de communication sans fil de proximité locale (SWIF) entre la première interface de communications sans fil (WIF1) et la deuxième interface de communications sans fil (WIF2) ;
envoi du paramètre d'identification (UID) du dispositif de stockage mobile (PCD) au dispositif de sécurité virtuel (RCV) via le canal de communication sans fil de proximité locale (SWIF) ;
envoi de la valeur privée (PV) du dispositif de stockage mobile (PCD) au dispositif de sécurité virtuel (RCV) via le canal de communication sans fil de proximité locale (SWIF) ;
encryption, par le module de sécurité, de la valeur privée (PV) utilisant la clé secrète (KSI) correspondant au paramètre d'identification (UID) du dispositif de stockage mobile (PCD) pour donner la version encryptée de la valeur privée ; et
envoi de la version encryptée de la valeur privée à partir du dispositif de sécurité virtuel (RCV) afin que ledit stockage sécurisé de la valeur privée (PV) soit effectué sur le dispositif de stockage mobile (PCD).

2. Méthode selon la revendication 1, comprenant en outre l'effacement de la valeur privée (PV) du dispositif de stockage mobile (PCD).

3. Méthode selon l'une quelconque des revendications 1 ou 2, comprenant en outre la génération de la clé secrète (KSI) correspondant au paramètre d'identification (UID) du dispositif de stockage mobile (PCD) si ledit paramètre d'identification (UID) n'est pas déjà stocké dans la mémoire sécurisée, ladite génération étant effectuée par le module de sécurité.

4. Méthode selon l'une quelconque des revendications précédentes, comprenant en outre l'effacement de l'une ou l'autre, ou des deux, la valeur privée (PV) et la version encryptée de la valeur privée du dispositif de sécurité virtuel (RCV) après ledit envoi de la version encryptée de la valeur privée au dispositif de stockage mobile (PCD).

5. Méthode selon l'une quelconque des revendications précédentes, où le canal de communication sans fil de proximité locale (SWIF) est un canal sécurisé, ledit canal ayant été sécurisé en utilisant la clé publique associée au module de sécurité.

6. Méthode selon la revendication 5, où ladite clé publique est reçue de la part du dispositif de sécurité virtuel (RCV).

7. Méthode selon la revendication 5, où ladite clé publique est reçue de la part d'un serveur de clé publique via un deuxième canal de communication différent du canal de communication sans fil de proximité locale (SWIF).

8. Méthode selon l'une quelconque des revendications précédentes, où le canal de communication sans fil de proximité locale (SWIF) est configuré pour fonctionner selon une norme de communication sans fil Bluetooth.

9. Méthode selon l'une quelconque des revendications précédentes, où le canal de communication sans fil de proximité locale (SWIF) est configuré pour fonctionner selon une norme de communication sans fil de communications en champ proche (NFC).

10. Méthode selon l'une quelconque des revendications précédentes, la méthode comprenant en outre une étape de rétablissement de la valeur personnelle (PV), ladite étape de rétablissement comprenant :
envoi de la version encryptée de la valeur privée du dispositif de stockage mobile (PCD) au dispositif de sécurité virtuel (RCV) via le canal de communication sans fil de proximité locale (SWIF);
décryption de la valeur personnelle par le dispositif de sécurité virtuel (RCV) utilisant la clé secrète (KSI) correspondant au dispositif de stockage mobile (PCD) ;
retour de la valeur personnelle décryptée (PV) au dispositif de stockage mobile (PCD) via le canal de communication sans fil de proximité locale (SWIF).

11. Système de stockage sécurisé comprenant un dispositif de sécurité virtuel (RCV) et un dispositif de stockage mobile (PCD) ;
le dispositif de stockage mobile (PCD) ayant un paramètre d'identification (UID) et comprenant une première interface de communications sans fil (WIF1) configurée pour fonctionner selon une norme de communication sans fil de proximité ;
le dispositif de sécurité virtuel (RCV) comprenant :
une deuxième interface de communications sans fil (WIF2) configurée pour fonctionner selon la norme de communication sans fil de proximité et pour établir ainsi un canal de communication sans fil de proximité locale (SWIF) entre le dispositif de sécurité virtuel (RCV) et le dispositif de stockage mobile (PCD) ;
une mémoire sécurisée comprenant une clé secrète (KSI) correspondant au paramètre d'identification (UID) du dispositif de stockage mobile (PCD), ladite clé secrète (KSI) ayant été générée par le dispositif de sécurité virtuel (RCV) ; et
un module de sécurité configuré pour :
recevoir la valeur privée (PV) et le paramètre d'identification (UID) du dispositif de stockage mobile (PCD) via le canal de communication sans fil de proximité locale (SWIF) ; et
encrypter la valeur privée en utilisant la clé secrète (KSI) correspondant au paramètre d'identification (UID) du dispositif de stockage mobile (PCD) le dispositif de stockage mobile (PCD) stockant une clé publique associée au module de sécurité ;
envoyer la version encryptée de la valeur privée audit dispositif de stockage mobile (PCD) pour le stockage.

12. Système de stockage sécurisé selon la revendication 11, où le module de sécurité est configuré en outre pour générer la clé secrète (KSI) correspondant au paramètre d'identification (UID) du dispositif de stockage mobile (PCD).

13. Système de stockage sécurisé selon l'une quelconque des revendications 11 ou 12, où le module de sécurité a une clé privée correspondante pour sécuriser le canal de communication sans fil de proximité locale (SWIF).

14. Système de stockage sécurisé selon l'une quelconque des revendications 11 à 13, où le dispositif de stockage mobile (PCD) est un dispositif de communication mobile et le dispositif de sécurité virtuel (RCV) est un dispositif de réception de contenu médiatique.

15. Système de stockage sécurisé selon l'une quelconque des revendications 11 à 14, où la norme de communication sans fil de proximité est soit une norme Bluetooth, soit une norme de communications en champ proche (NFC).
